# EUROPÄISCHE PATENTANMELDUNG

(11) **EP 2 535 475 A2**
(43) Veröffentlichungstag der Anmeldung: **19.12.2012**
(21) Anmeldenummer: 12171851.4
(22) Anmeldetag: 13.06.2012
(51) Int. Cl.: E04C 3/12, E04C 3/36

(54) **Holzprofilelement und Profilelementanordnung**

(30) Priorität: 14.06.2011 DE 202011050438 U
(71) Anmelder: LIGNUM Holding AG, 12205 Berlin (DE)
(72) Erfinder: Nobis, Andreas Michael Johannes, Dr., 14129 Berlin (DE)
(74) Vertreter: Bittner, Thomas L.

(57) **Zusammenfassung**

Holzprofilelement (1, 10), mit einem gestreckten Elementkörper (2) und durch den Elementkörper (2) hindurch gebildeten Funktionsbohrungen (3), wobei der Elementkörper (2) mit einem Systemmaß *a* wie folgt ausgeführt ist: die Dicke des Elementkörpers (2) beträgt (m · *a*), wobei m=1, 2, ... gilt, die Gesamtlänge des Elementkörpers (2) beträgt 12·*a* + n·(4*a*), wobei n=0, 1,2, ... gilt, der Querschnitt des Elementkörpers (2) ist ein gleichseitiges Achteck, und die Funktionsbohrungen (3) weisen untereinander einen Abstand von (k · *a*) auf, wobei k=1, 2, ... gilt, und verlaufen senkrecht zur Längsachse und zu zugeordneten Seitenflächen des Elementkörpers (2).

## Beschreibung

Die Erfindung betrifft ein Holzprofilelement sowie eine Profilelementanordnung mit Holzprofilelementen.

### Hintergrund der Erfindung

Holzprofilelemente werden in verschiedenen Ausgestaltungsvarianten einzeln oder im Verbund in unterschiedlichen Anwendungen eingesetzt, zum Beispiel zur Garten- oder Landschaftsgestaltung oder für Tragwerke. So sind Profilelemente mit rundem oder viereckigem Querschnitt bekannt, die zur Stufenbefestigung oder zur Umrandung von Rasenflächen oder Beeten verwendet werden. Hierbei werden die vorgesehenen Profilelemente nebeneinander angeordnet. Seit Alters her werden Tragwerke vor allem aus viereckigen Balken gefertigt.

Üblicherweise werden für die verschiedenen Aufgaben jeweils individuell geformte Profilelemente verwendet, die aufgrund ihrer individuellen Konstruktion für die jeweiligen Aufgaben angepasst sind.

### Zusammenfassung der Erfindung

Aufgabe der Erfindung ist es, ein Holzprofilelement sowie eine Profilelementanordnung mit mehreren Holzprofilelementen anzugeben, die für einen vielfältigen Einsatz zu unterschiedlichsten Zwecken geeignet sind, insbesondere zur Garten- oder Landschaftsgestaltung oder zum Ausbilden von Tragwerken. Es sollen so Elemente eines Bausatzes oder -systems bereitgestellt werden, die ohne die Notwendigkeit einer individuellen konstruktiven Anpassung für die sehr unterschiedlichen Aufgabenstellungen nutzbar sind.

Diese Aufgabe wird erfindungsgemäß gelöst durch ein Holzprofilelement nach dem unabhängigen Anspruch 1. Weiterhin ist eine Profilelementanordnung mit Profilelementen nach dem unabhängigen Anspruch 10 geschaffen. Vorteilhafte Ausgestaltungen der Erfindung sind Gegenstand von abhängigen Unteransprüchen.

Die Erfindung umfasst den Gedanken eines Holzprofilelementes mit einem gestreckten Elementkörper und durch den Elementkörper hindurch gebildeten Funktionsbohrungen, wobei der Elementkörper mit einem Systemmaß *a* wie folgt ausgeführt ist:
- die Dicke des Elementkörpers beträgt (m · *a),* wobei m=1, 2, ... gilt,
- die Gesamtlänge des Elementkörpers beträgt 12·*a* + n·(4*a*), wobei n=0, 1, 2, ... gilt,
- der Querschnitt des Elementkörpers ist ein gleichseitiges Achteck, und
- die Funktionsbohrungen weisen untereinander einen Abstand von (k · *a*) auf, wobei k=1, 2, ... gilt, und verlaufen senkrecht zur Längsachse und zu zugeordneten Seitenflächen des Elementkörpers.

Nach einem weiteren Aspekt der Erfindung ist eine Profilelementanordnung mit solchen Holzprofilelementen geschaffen, wobei die Holzprofilelemente mittels Verbindungselementen, die in Funktionsbohrungen angeordnet sind, miteinander verbunden sind, derart, dass Oberflächen benachbarter Holzprofilelemente flächig aufeinander liegend angeordnet sind. Diese Oberflächen können die Flanken der Holzprofilelemente, deren stirnseitigen Endflächen oder deren stirnseitigen Abschrägungen sein. Die Profilelementanordnung kann in einer Ausführung ausschließlich aus den verbundenen Holzprofilelementen und den diese verbindenden Verbindungselementen bestehen.

Die konstruktive Ausgestaltung der Holzprofilelemente ermöglicht deren variablen und vielgestaltigen Einsatz für Profilelementanordnungen. Das einheitlich für die verschiedenen konstruktiven Eigenschaften der Profilelemente genutzte Systemmaß *a* begründet eine hohe Flexibilität hinsichtlich der Kombinierbarkeit von mehreren Profilelementen in den Profilelementanordnungen, zum Beispiel Bauteilen, Bauelementen oder Bauwerken. Mit Hilfe mehrerer Holzprofilelemente können in der Fläche ebene, gekrümmte oder räumliche Profilelementanordnungen hergestellt werden, indem entsprechende Oberflächen der einzelnen Profilelemente aneinander gelegt werden. Die ebenfalls dem Systemmaß gehorchenden Funktionsbohrungen unterstützen eine hohe Flexibilität bei der Kombinierbarkeit der Profilelemente in Profilelementanordnungen.

Soweit vorangehend Abmessungen in Verbindung mit den Funktionsbohrungen angegeben werden, beziehen sich die Angaben auf die Lochmitte der jeweiligen Funktionsbohrung. Das Systemmaß *a* beträgt beispielsweise 15 mm, wobei der Faktor m bevorzugt 2, 3 oder 4 ist. Hierdurch ergeben sich in einem bevorzugten Ausführungsbeispiel Holzprofilelemente mit den Abmessungen 30 x 30 mm, 45 x 45 mm sowie 60 x 60 mm.

Eine bevorzugte Weiterbildung der Erfindung sieht vor, dass zumindest ein Teil der Funktionsbohrungen um die Längsachse des Elementkörpers zueinander radial versetzt um einen Winkel von (b · 45°) angeordnet ist, wobei b=1, 2, 3 gilt. In einer Ausgestaltung kann vorgesehen sein, dass benachbart angeordnete Funktionsbohrungen jeweils eine gleichartige Verdrehung zueinander aufweisen, sodass beispielsweise eine 1., 3. und 5. Funktionsbohrung mit einem Relativwinkel von 0° gebildet sind und eine jeweils hierzu benachbarte Funktionsbohrung, nämlich die 2., 4. und 6. Funktionsbohrung, jeweils um 45° gedreht ist. Alternativ kann vorgesehen sein, dass alle Funktionsbohrungen in dem Elementkörper des Profilelementes parallel zueinander gebildet sind.

Bei einer zweckmäßigen Ausgestaltung der Erfindung kann vorgesehen sein, dass wenigstens eine Kreuzbohrung in dem Elementkörper gebildet ist, bei sich zwei der Funktionsbohrungen kreuzen. Die sich kreuzenden Funktionsbohrungen weisen dann einen überlappenden oder gemeinsamen Bereich in dem Holzprofilelement auf.

Eine vorteilhafte Ausführungsform der Erfindung sieht vor, dass sich die zwei Funktionsbohrungen in einem Kreuzungswinkel von (h · 45°) kreuzen, wobei h=1, 2, 3 gilt.

Bevorzugt sieht eine Fortbildung der Erfindung vor, dass eine endseitige Funktionsbohrung an einem Ende des Elementkörpers und / oder am hierzu entgegengesetzten Ende des Elementkörpers mit einem Endabstand von *a* zum jeweils zugeordneten Ende des Elementkörpers gebildet ist. Auch hier bezieht sich die Maßangabe auf die Lochmitte der Funktionsbohrung.

Bevorzugt sieht eine Weiterbildung der Erfindung vor, dass die Funktionsbohrungen hinsichtlich der Mitte des Elementkörpers, wo wahlweise auch eine Funktionsbohrung angeordnet sein kann, einer symmetrischen Anordnung entsprechend angeordnet sind.

Bei einer vorteilhaften Ausgestaltung der Erfindung kann vorgesehen sein, dass wenigstens eine stirnseitige Endfläche des Elementkörpers umlaufend Abschrägungen aufweist. Auf diese Weise entsteht am Ende des Elementkörpers als geometrisches Gebilde ein Kegelstumpf mit acht Abschrägungen.

Eine Weiterbildung der Erfindung kann vorsehen, dass die wenigstens eine stirnseitige Endfläche des Elementkörpers umlaufend mit demselben Winkel abgeschrägt ist. Vorzugsweise beträgt der Winkel der Abschrägung für alle beteiligten Abschrägungen etwa 45°.

Eine bevorzugte Weiterbildung der Erfindung sieht vor, dass der Elementkörper aus einem Hartholz wie Robinie oder Teak ist. Auch andere Holzarten können zum Einsatz kommen, vorzugsweise in Vollholzausführung.

In Verbindung mit der Profilelementanordnung mit mehreren Profilelementen kann eine Ausgestaltung vorsehen, dass die Oberflächen benachbarter Holzprofilelemente mittels eines oder mehrerer Dübelelemente verbunden sind, die in zugeordnete Funktionsbohrungen in den Holzprofilelementen eingeführt sind. Die Dübelelemente können aus Holz, Metall oder Kunststoff bestehen. Sie dienen zur gegenseitigen Befestigung benachbarter Profilelemente.

Eine weitere Ausgestaltung der Profilelementeanordnung kann vorsehen, dass die Holzprofilelemente mittels eines oder mehrerer Stangenelemente verbunden sind, die sich in Funktionsbohrungen durch mehrere oder alle miteinander verbundene Holzprofilelemente erstrecken. Die Stangenelemente können wenigstens abschnittsweise mit Gewinde versehen sein, um die Stangenelemente so zum Beispiel direkt in die Funktionsbohrungen einzuschrauben, indem das Gewinde in das Holz gedrückt wird, oder Schraubmuttern zur stabilisierenden Befestigung der Profilelemente zu nutzen. Auch eine Ausführung als durchgehende Gewindestange kann vorgesehen sein. Als Material für die Stangenelemente kann Edelstahl zum Einsatz kommen.

Bei einer Fortbildung der Erfindung kann vorgesehen sein, dass die Holzprofilelemente mittels eines oder mehrerer Schrauben und / oder Bolzenelemente verbunden sind, die in die Funktionsbohrungen eingeführt sind.

Mit Hilfe der mehreren Holzprofilelemente können verschiedenste Bauteile oder Bauwerke für den Garten- und Landschaftsbau gebildet werden. Solche Bauteile oder Bauwerke können insbesondere sein: Pfähle, Geländer, Stufen, Stützwände, Uferbefestigungen, Zäune, Schutzwände, Türen, Tore, Möbel, insbesondere Parkmöbel, Kanten für Rasen, Beet, Weg oder Terrasse, Rankhilfen, Pflanzkästen oder -kübel, Spaliere, Pergolen und Leuchtenfiiße oder -masten.

In einer Ausgestaltung der Profilelementanordnung ist mit den Holzprofilelementen ein Tragwerk gebildet. Solche Tragwerke finden zum Beispiel Anwendung in Verbindung mit Dächern, Brückenkonstruktionen, Tragkonstruktionen zum Aufnehmen von Gegenständen wie zum Beispiele Regale oder Gestelle für Solarmodule, oder Pavillons.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine schematische Darstellung eines Holzprofilelementes,
- Fig. 2: eine schematische Darstellung eines weiteren Holzprofilelementes mit im Vergleich zum Profilelement aus Fig. 1 doppelter Breite und
- Fig. 3: eine schematische Darstellung eines Grundkörpers für ein Holzprofilelement ohne Funktionsbohrungen.

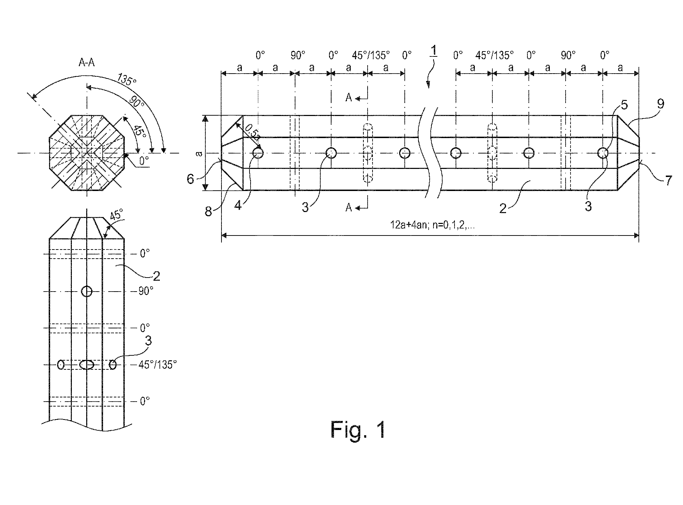

Fig. 1 zeigt eine schematische Darstellung eines Holzprofilelementes 1, bei dem ein Elementkörper 2 mit einem achteckigen Querschnitt gebildet ist. Die konstruktive Ausgestaltung des Holzprofilelementes 1 nutzt für verschiedene Abmessungen ein Systemmaß *a,* welches beispielsweise 15 mm beträgt. Hiervon ausgehend beträgt die Gesamtlänge des Profilelementes 1 *(12a* + 4*a*n), wobei n=0, 1, 2, ... gilt. Für die in Fig. 1 dargestellte Ausführungsform ist die Dicke des Profilelementes gleich dem Systemmaß *a.*

Funktionsbohrungen 3 sind im Abstand *a* über die Länge des Elementkörpers 2 verteilt und durch den Elementkörper 2 hindurch gebildet. Sie verlaufen senkrecht zur Längsachse des Elementkörpers 2 und zu zugeordneten Seitenflächen des Elementkörpers 2. Die Funktionsbohrungen 3 sind radial verdreht gebildet, wobei Verdrehwinkel von 45°, 90° und 135° vorgesehen sind.

Gemäß Fig. 1 entspricht auch der Abstand von endseitigen Funktionsbohrungen 4, 5 zur jeweiligen Stirnseite 6, 7 des Elementkörpers 2 dem Systemmaß *a.*

Im Bereich der Stirnseiten 6, 7 sind Abschrägungen 8, 9 umlaufend hergestellt, bei der dargestellten Ausführungsform mit einem Winkel von 45°.

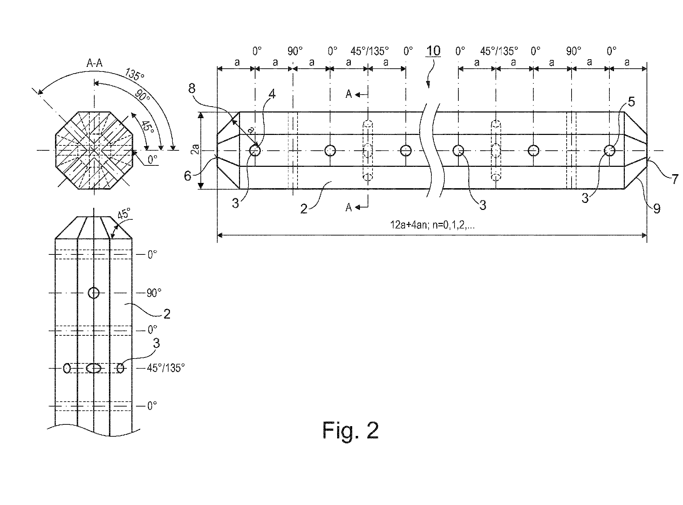

Fig. 2 zeigt eine schematische Darstellung eines weiteren Holzprofilelementes 10. In Fig. 2 werden für die gleichen Merkmale dieselben Bezugszeichen wie in Fig. 1 verwendet. Im Unterschied zu dem Profilelement 1 in Fig. 1 ist die Dicke des weiteren Holzprofilelementes 10 gleich dem doppelten Systemmaß *a.*

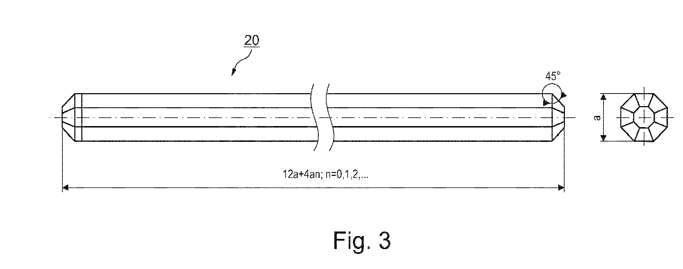

Fig. 3 zeigt eine schematische Darstellung eines Grundkörpers 20 für die Holzprofilelemente 1, 10 aus den Fig. 1 und 2, welcher noch keine Funktionsbohrungen aufweist.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Holzprofilelement (1, 10), mit einem gestreckten Elementkörper (2) und durch den Elementkörper (2) hindurch gebildeten Funktionsbohrungen (3), wobei der Elementkörper (2) mit einem Systemmaß *a* wie folgt ausgeführt ist:
- die Dicke des Elementkörpers (2) beträgt (m · *a*), wobei m=1, 2, ... gilt,
- die Gesamtlänge des Elementkörpers (2) beträgt 12·*a* + n·(4*a*), wobei n=0, 1, 2, ... gilt,
- der Querschnitt des Elementkörpers (2) ist ein gleichseitiges Achteck, und
- die Funktionsbohrungen (3) weisen untereinander einen Abstand von (k · *a*) auf, wobei k=1, 2, ... gilt, und verlaufen senkrecht zur Längsachse und zu zugeordneten Seitenflächen des Elementkörpers (2).

2. Holzprofilelement (1; 10) nach Anspruch 1, **dadurch gekennzeichnet, dass** zumindest ein Teil der Funktionsbohrungen (3) um die Längsachse des Elementkörpers (2) zueinander radial versetzt um einen Winkel von (b · 45°) angeordnet ist, wobei b=1, 2, 3 gilt.

3. Holzprofilelement (1, 10) nach Anspruch 1 oder 2, **dadurch gekennzeichnet, dass** wenigstens eine Kreuzbohrung in dem Elementkörper (2) gebildet ist, bei sich zwei der Funktionsbohrungen (3) kreuzen.

4. Holzprofilelement (1, 10) nach Anspruch 3, **dadurch gekennzeichnet, dass** sich die zwei Funktionsbohrungen (3) in einem Kreuzungswinkel von (h · 45°) kreuzen, wobei h=1, 2, 3 gilt.

5. Holzprofilelement (1; 10) nach mindestens einem der vorangehenden Ansprüche, **dadurch gekennzeichnet, dass** eine endseitige Funktionsbohrung (4; 5) an einem Ende des Elementkörpers (2) und / oder am hierzu entgegengesetzten Ende des Elementkörpers (2) mit einem Endabstand von *a* zum jeweils zugeordneten Ende des Elementkörpers (2) gebildet ist.

6. Holzprofilelement (1; 10) nach mindestens einem der vorangehenden Ansprüche, **dadurch gekennzeichnet, dass** die Funktionsbohrungen (3) hinsichtlich der Mitte des Elementkörpers (2) einer symmetrischen Anordnung entsprechend angeordnet sind.

7. Holzprofilelement (1; 10) nach mindestens einem der vorangehenden Ansprüche, **dadurch gekennzeichnet, dass** wenigstens eine stirnseitige Endfläche (6, 7) des Elementkörpers (2) umlaufend Abschrägungen (8, 9) aufweist.

8. Holzprofilelement (1; 10) nach Anspruch 7, **dadurch gekennzeichnet, dass** die wenigstens eine stirnseitige Endfläche (6, 7) des Elementkörpers (2) umlaufend mit demselben Winkel abgeschrägt ist.

9. Holzprofilelement (1; 10) nach mindestens einem der vorangehenden Ansprüche, **dadurch gekennzeichnet, dass** der Elementkörper (2) aus einem Hartholz wie Robinie oder Teak ist.

10. Profilelementanordnung, mit Holzprofilelementen (1, 10) nach mindestens einem der vorangehenden Ansprüche, wobei die Holzprofilelemente (1, 10) mittels Verbindungselementen, die in Funktionsbohrungen (3) angeordnet sind, miteinander verbunden sind, derart, dass Oberflächen benachbarter Holzprofilelemente flächig aufeinander liegend angeordnet sind.

11. Profilelementanordnung nach Anspruch 10, **dadurch gekennzeichnet, dass** die Oberflächen benachbarter Holzprofilelemente mittels eines oder mehrerer Dübelelemente verbunden sind, die in zugeordnete Funktionsbohrungen (3) in den Holzprofilelementen (1, 10) eingeführt sind.

12. Profilelementanordnung nach Anspruch 10 oder 11, **dadurch gekennzeichnet, dass** die Holzprofilelemente (1, 10) mittels eines oder mehrerer Stangenelemente verbunden sind, die sich in Funktionsbohrungen (3) durch mehrere oder alle Holzprofilelemente erstrecken.

13. Profilelementanordnung nach mindestens einem der Ansprüche 10 bis 12, dadurch g e - **kennzeichnet,** dass die Holzprofilelemente (1, 10) mittels eines oder mehrerer Schrauben und / oder Bolzenelemente verbunden sind, die in die Funktionsbohrungen (3) eingeführt sind.

14. Profilelementanordnung nach mindestens einem der Ansprüche 10 bis 13, dadurch g e - **kennzeichnet,** dass mit den Holzprofilelementen (1, 10) ein Bauteil oder ein Bauwerk zur Garten- oder Landschaftsgestaltung ausgewählt aus der folgenden Gruppe gebildet ist:
- Pfahl,
- Geländer,
- Stufenelement, Stützelement, Uferbefestigung,
- Zaun, Sichtschutzfeld, Schutzwand,
- Tür, Tor,
- Garten- und Parkmöbel,
- Kantenelement für Rasen, Beet, Weg oder Terrasse,
- Rankhilfe,
- Pflanzkasten oder -kübel,
- Spalier, Pergola,
- Leuchtenfuß und -mast.

15. Profilelementanordnung nach mindestens einem der Ansprüche 10 bis 13, dadurch g e - **kennzeichnet,** dass mit den Holzprofilelementen (1, 10) ein Tragwerk gebildet ist.
